# EUROPEAN PATENT APPLICATION

(11) **EP 2 725 061 A1**
(43) Date of publication of application: **30.04.2014**
(21) Application number: 13160152.8
(22) Date of filing: 20.03.2013
(51) Int. Cl.: C08L 63/00, C08L 79/04

(54) **Cyanate ester resin composition, and a prepreg, a laminated material and a metal clad laminated material made therefrom**

(30) Priority: 19.10.2012 CN 201210402936
(71) Applicant: Shengyi Technology Co., Ltd., 523000 Dongguan City Guangdong (CN)
(72) Inventor: Tang, Junqi, 523000 Dongguan City (CN)
(74) Representative: Ricker, Mathias

(57) **Abstract**

The present invention relates to a cyanate ester resin composition and a prepreg, a laminated material and a metal clad laminated material made therefrom. The cyanate ester resin composition comprises cyanate ester resin, non-halogen epoxy resin, and inorganic filler material, and the structural formula of the cyanate ester resin is as the following:

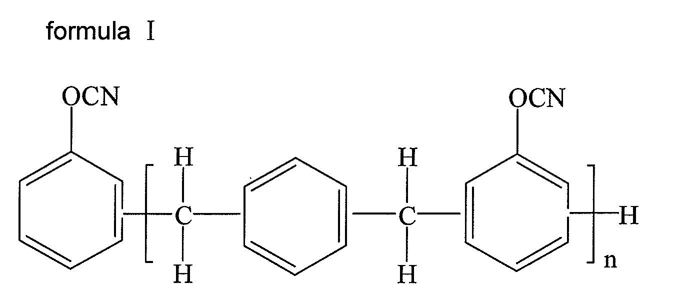

Wherein, n represents an integer between 1 and 50.

The cyanate ester resin composition of the present invention has good heat resistance and flame retardance. The laminated material and the metal clad laminated material made from the prepreg that is made from the cyanate ester resin composition, still have good flame retardance and low coefficients of thermal expansion in X, Y directions, without using halogen-containing compounds or phosphorus-containing compounds as the flame retardant, so they are fit for making a substrate material for high density PCB.

## Description

### FIELD OF THE INVENTION

The present invention relates to a resin composition, particularly relates to a cyanate ester resin composition and a prepreg, a laminated material and a metal clad laminated material made therefrom.

### BACKGROUND OF THE INVENTION

With development of computers, electronic equipments, and information communication equipments toward high performance, high function and networking, printed circuit boards are required to be improved to achieve high wiring density and high integrated level. So, metal clad laminated materials for making printed circuit boards are required to have more excellent heat resistance, humidity resistance and reliability, etc.

Cyanate ester resin has excellent dielectric performance, heat resistance, mechanical property, and processability, which is a general matrix resin used in making metal clad laminated materials for high-end printed circuit boards. In recent years, prepregs, and laminated materials made from a resin (generally named as BT resin) composition including bisphenol A type cyanate ester resin and maleimide compound are widely used in high performance PCB materials for semiconductor packages.

A bisphenol A type cyanate ester resin composition has excellcent heat resistance, chemical resistance, and adhesiveness, etc., but, of which the cured resin suffers from the problems of high hydroscopic property and poor humidity resistance, and the mechanical properties such as elasticity modulus of the cured resin also can not meet the performance requirement of a high-end substrate.

A DCPD type cyanate ester resin composition has excellent dielectric performance, heat resistance, hydroscopic property, and good mechanical properties, which is widely used in fields such as high-frequency circuit substrates and high performance composite materials, so it can be used to solve the problem of poor hydroscopic property of a bisphenol A type cyanate ester resin. But, the flame retardance of a dicyclopentadiene type cyanate ester resin composition is poor, which can not meet the performance requirement of a high-end substrate.

Besides, a resin composition for making metal clad laminated materials is usually required to have flame retardance, so, a bromine-containing flame retardant is usually used at the same time to achieve flame retardance. However, in recent years, more attention is payed to the environmental problem, so, it is required to use non-halogen compounds to achieve flame retardance. Recently, phosphorus-containing compounds are used as a flame retardant, but various intermediates and production process of phosphorus-containing compounds all have some toxicity. A phosphorus-containing compound may produce poisonous gases (such as methylphosphine) and poisonous substances (such as triphenylphosphine) during its burning process, and its waste materials may cause potential risks to the aquatic environment. So, it is necessary to develop a laminated material having flame retardance and high reliability, without using halogen-containing compounds or phosphorus-containing compounds.

The US patent No. US7655871 adopted a phenol novolac type cyanate ester resin, a biphenyl type epoxy resin, and a phenoxy resin as the matrix resin, lots of silica as a filler, and fiberglass cloth as a reinforcing material, to make a laminated material that has excellent heat resistance, thereby achieving halogen-free flame retardance. But after a phenol novolac type cyanate ester resin is cured in a general technological condition, the cured resin has high hydroscopic property and poor humidity resistance. Besides, the phenol novolac type cyanate ester resin composition itself has poor flame retardance, so, it is necessary to add more inorganic filler to achieve flame retardance to meet the requirement of halogen-free and phosphorus-free flame retardance, which will in turn reduce the processability.

### SUMMARY OF THE INVENTION

An object of the present invention is to provide a cyanate ester resin composition having good heat resistance and flame retardance, which can be used to make PCB materials.

Another object of the present invention is to provide a prepreg, a laminated material and a metal clad laminated material made from the above mentioned cyanate ester resin composition. The laminated material and the metal clad laminated material made from the prepreg still have good flame retardance, and low coefficients of thermal expansion in X, Y directions, without using halogen-containing compounds or phosphorus-containing compounds as the flame retardant, which are fit for making a substrate material for high density PCB.

To achieve the above mentioned objects, the present invention provides a cyanate ester resin composition, comprising cyanate ester resin, non-halogen epoxy resin, and inorganic filler material, and the structural formula of the cyanate ester resin is as the following:

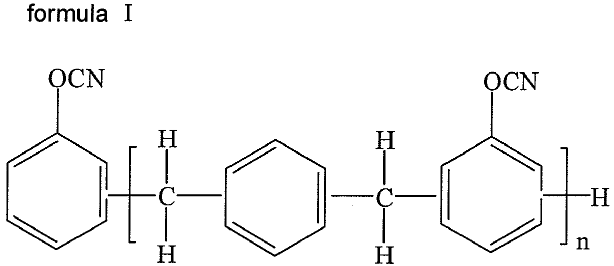

Wherein, n represents an integer between 1 and 50. Furthermore, n represents an integer between 1 and 10, and when n is in the range, the cyanate ester resin has comparatively good wettability to the substrate material.

The cyanate ester resin of the present invention is not particularly restrictive, which is a cyanate ester resin that comprises at least two cyanate ester groups in each molecule and is as shown in formula I , or a prepolymer thereof. The cyanate ester resin can be used alone, or can be used by mixing at least two kinds of cyanate ester resins together as required.

The usage amount of the cyanate ester resin is not particularly restrictive, which is preferred to comprise 10-90wt%, more preferred to comprise 20-80wt%, and most preferred to comprise 30-70wt% of the total amount of the cyanate ester resin and the non-halogen epoxy resin in the cyanate ester resin composition.

The non-halogen epoxy resin of the present invention is an epoxy resin that comprises at least two epoxy groups in each molecule and no halogen atoms in the molecular structure.

To improve the heat resistance and flame retardance of the cyanate ester resin composition, the non-halogen epoxy resin is preferred to be as the non-halogen epoxy resin of the structure shown in formula II:

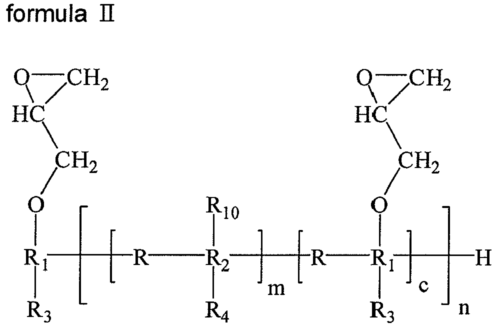

wherein, R represents -O- or 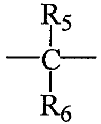 group, R₁₀ represents hydrogen or 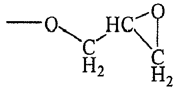 group, R₁ and R₂ represents aryl, such as phenyl, naphthyl, and biphenyl, R₃ and R₄ represent hydrogen, alkyl, aryl, aralkyl or a group as shown in formula III, R₅ and R₆ represent hydrogen, alkyl, aryl or aralkyl, m represents an integer between 0 and 5, c represents an integer between 1 and 5, and n represents an integer between 1 and 50.

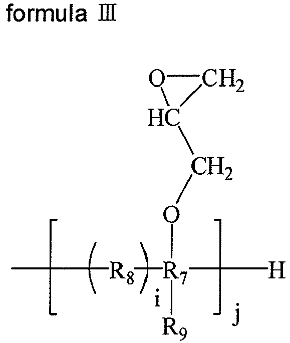

wherein, R₇ represents aryl, R₈ represents -O- or 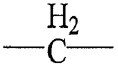 group, R₉ represents hydrogen, alkyl, aryl or aralkyl, i represents 0 or 1, and j represents 1 or 2.

The non-halogen epoxy resin is further preferred to be aralkyl novolac type epoxy resin or aryl ether type epoxy resin of the structure as shown in formula V:

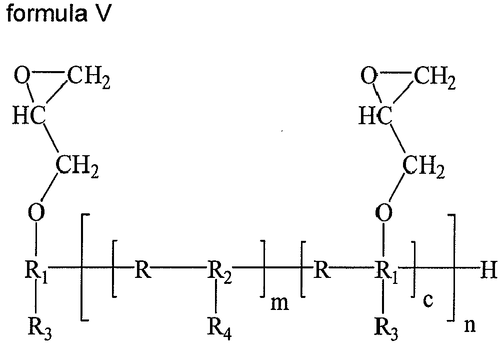

wherein, R represents -O- or 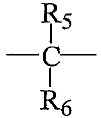 group, R₁ and R₂ represent aryl, such as phenyl, naphthyl, and biphenyl, R₃, R₄, R₅ and R₆ represent hydrogen, alkyl, aryl or aralkyl, m represents an integer between 1 and 5, c represents an integer between 1 and 5, and n represents an integer between 1 and 50.

The non-halogen epoxy resin can be used alone, or can be used by mixing multiple kinds of non-halogen epoxy resins together as required. The usage amount of the non-halogen epoxy resin is not particularly restrictive, which is preferred to comprise 10-90wt%, more preferred to comprise 20-80wt%, and most preferred to comprise 30-70wt% of the total amount of the cyanate ester resin and the non-halogen epoxy resin in the cyanate ester resin composition.

The inorganic filler material of the present invention is not particularly restrictive. Wherein, fused silica has the characteristic of low coefficient of thermal expansion, and boehmite has excellent flame retardance and heat resistance, so they are preferred.

The usage amount of the inorganic filler material of the present invention is not particularly restrictive. When the total amount of the cyanate ester resin and the non-halogen epoxy resin in the cyanate ester resin composition is 100 parts by weight, the usage amount of the corresponding inorganic filler material is preferred to be 10-300 parts by wight, more preferred to be 30-200 parts by weight, and most preferred to be 50-150 parts by weight.

The cyanate ester resin composition of the present invention can also comprises maleimide compound. The maleimide compound is not particularly restrictive, which is a compound that comprises at least one maleimide group in each molecule. The maleimide compound is further preferred to be a compound that comprises at least two maleimide groups in each molecule.

The usage amount of the maleimide compound of the present invention is not particularly restrictive, which is preferred to comprise 5-80wt%, and more preferred to comprise 10-70wt% of the total amount of the cyanate ester resin and the maleimide compound in the cyanate ester resin composition.

The present invention also provides a prepreg made from the above mentioned cyanate ester resin composition. The prepreg comprises a substrate material, and the cyanate ester resin composition that adheres to the substrate material after the substrate material is dipped in the cyanate ester resin composition and then is dried.

The present invention further provides a laminated material and a metal clad laminated material made from the above mentioned prepreg. The laminated material comprises at least one prepreg that is laminated and cured to obtain the laminated material; the metal clad laminated material comprises at least one prepreg, and metal foil cladded to one side or two sides of the prepreg, and the prepreg and the metal foil are laminated and cured to obtain the metal clad laminated material.

The advantages of the present invention: the cyanate ester resin composition provided by the present invention has good heat resistance and flame retardance. The laminated material and the metal clad laminated material made from the prepreg that is made from the cyanate ester resin composition, still have good flame retardance and low coefficients of thermal expansion in X, Y directions, without using halogen-containing compounds or phosphorus-containing compounds as the flame retardant, so they are fit for making a substrate material for high density PCB.

### DESCRIPTION OF THE PREFERRED EMBODIMENT

The present invention provides a cyanate ester resin composition comprising cyanate ester resin, non-halogen epoxy resin, and inorganic filler material, and the structural formula of the cyanate ester resin is as the following:

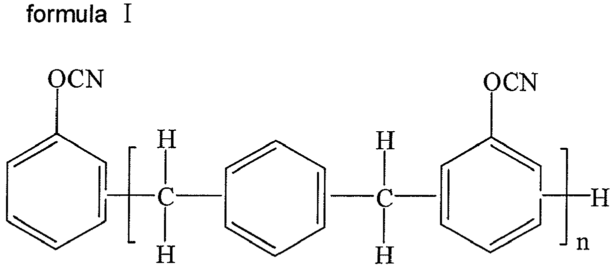

Wherein, n represents an integer between 1 and 50. Furthermore, n is preferred to represent an integer between 1 and 10, and when n is in the range, the cyanate ester resin has comparatively good wettability to the substrate material.

The cyanate ester resin of the present invention is not particularly restrictive, which is a cyanate ester resin that comprises at least two cyanate ester groups in each molecule and is as shown in formula I , or a prepolymer thereof. The cyanate ester resin can be used alone, or can be used by mixing at least two kinds of cyanate ester resins together as required.

The usage amount of the cyanate ester resin is not particularly restrictive, which is preferred to comprise 10-90wt%, more preferred to comprise 20-80wt%, and most preferred to comprise 30-70wt% of the total amount of the cyanate ester resin and the non-halogen epoxy resin in the cyanate ester resin composition.

The synthetic method for the cyanate ester resin is not particularly restrictive, which can be selected from common synthetic methods for a cyanate ester resin. Concretely speaking, the synthetic method for the cyanate ester resin is as the following: in the condition of alkaline compound existing, make phenol phenyl aralkyl type novolac resin of the structure as shown in the following formula IV to react with cyanogen halogenide in an inert organic solvent, thereby obtaining the cyanate ester resin.

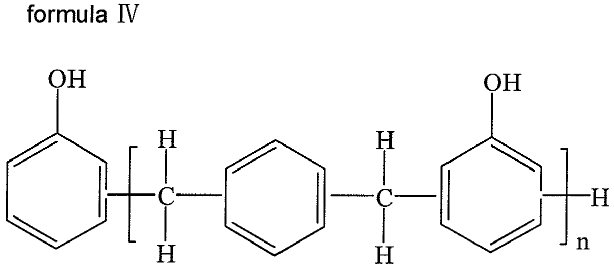

Wherein, n represents an integer between 1 and 50.

The non-halogen epoxy resin of the present invention is an epoxy resin that comprises at least two epoxy groups in each molecule and no halogen atoms in the molecular structure. The non-halogen epoxy resin specifically is bisphenol A type epoxy resin, bisphenol F type epoxy resin, phenol novolac type epoxy resin, cresol novolac type epoxy resin, bisphenol A novolac type epoxy resin, trifunctional phenol type epoxy resin, tetrafunctional phenol type epoxy resin, naphthalene type epoxy resin, naphthol type epoxy resin, anthracene type epoxy resin, oxygen type epoxy resin, norbornylene type epoxy resin, adamantane type epoxy resin, fluorene type epoxy resin, biphenyl type epoxy resin, dicyclopentadiene type epoxy resin, aralkyl type epoxy resin, aralkyl novolac type epoxy resin, aryl ether type epoxy resin, alicyclic epoxy resin, polyol type epoxy resin, silicon-containing epoxy resin, nitrogen-containing epoxy resin, compound obtained from epoxidation of double bond such as butadiene, glycidyl amine epoxy resin, glycidyl ester epoxy resin, etc.

To improve the flame retardance of the cyanate ester resin composition, the non-halogen epoxy resin is preferred to be as the non-halogen epoxy resin of the structure shown in formula II:

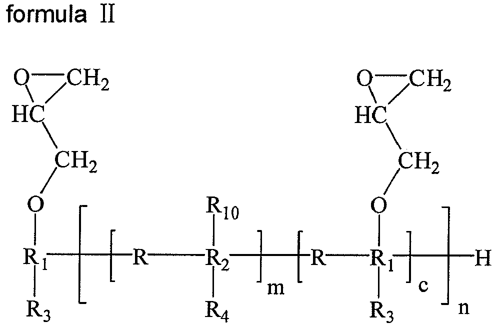

wherein, R represents -O- or 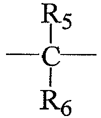 group, R₁₀ represents hydrogen or 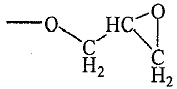 group, R₁ and R₂ represents aryl, such as phenyl, naphthyl, and biphenyl, R₃ and R₄ represent hydrogen, alkyl, aryl, aralkyl or a group as shown in formula III, R₅ and R₆ represent hydrogen, alkyl, aryl or aralkyl, m represents an integer between 0 and 5, c represents an integer between 1 and 5, and n represents an integer between 1 and 50.

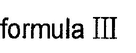

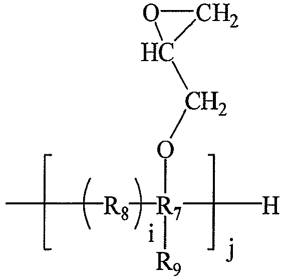

wherein, R₇ represents aryl, R₈ represents -O- or 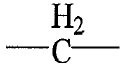 group, R₉ represents hydrogen, alkyl, aryl or aralkyl, i represents 0 or 1, and j represents 1 or 2.

The non-halogen epoxy resin is further preferred to be aralkyl novolac type epoxy resin or aryl ether type epoxy resin of the structure as shown in formula V:

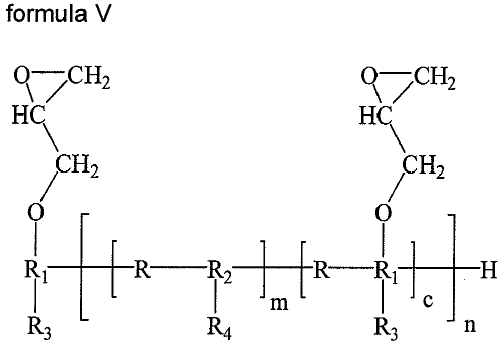

wherein, R represents -O- or 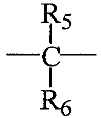 group, R₁ and R₂ represent aryl, such as phenyl, naphthyl, and biphenyl, R₃, R₄, R₅ and R₆ represent hydrogen, alkyl, aryl or aralkyl, m represents an integer between 1 and 5, c represents an integer between 1 and 5, and n represents an integer between 1 and 50.

The non-halogen epoxy resin specifically is phenol phenyl aralkyl type epoxy resin, phenol biphenyl aralkyl type epoxy resin, phenol naphthyl aralkyl type epoxy resin, naphthol phenyl aralkyl type epoxy resin, naphthol biphenyl aralkyl type epoxy resin, naphthol naphthyl aralkyl type epoxy resin, phenol phenyl ether type epoxy resin, phenol biphenyl ether type epoxy resin, phenol naphthyl ether type epoxy resin, naphthol phenyl ether type epoxy resin, naphthol biphenyl ether type epoxy resin, naphthol naphthyl ether type epoxy resin, etc.

The non-halogen epoxy resin can be used alone, or can be used by mixing multiple kinds of non-halogen epoxy resins together as required. The usage amount of the non-halogen epoxy resin is not particularly restrictive, which is preferred to comprise 10-90wt%, more preferred to comprise 20-80wt%, and most preferred to comprise 30-70wt% of the total amount of the cyanate ester resin and the non-halogen epoxy resin in the cyanate ester resin composition.

The inorganic filler material of the present invention is not particularly restrictive, which specifically is silica (such as natural silica, fused silica, amorphous silica, spherical silica, and hollow silica), metal hydrate (such as aluminum hydroxide, boehmite, and magnesium hydroxide), molybdenum oxide, zinc molybdate, titanium oxide, strontium titanate, barium titanate, barium sulfate, boron nitride, aluminium nitride, silica carbide, aluminum oxide, zinc borate, zinc hydroxystannate, clay, kaolin, talc, mica, short glass fibre, hollow glass, etc. Wherein, fused silica has the characteristic of low coefficient of thermal expansion, and boehmite has excellent flame retardance and heat resistance, so they are preferred. The average particle size (d50) of the inorganic filler material is not particularly restrictive, in consideration of dispersity, which is preferred to be 0.1-10 µm, and more preferred to be 02-5 µm. Inorganic filler materials of various type, various particle size distribution, or various average particle size can be used alone or can be used by mixing multiple kinds of inorganic filler materials together as required.

The usage amount of the inorganic filler material of the present invention is not particularly restrictive. When the total amount of the cyanate ester resin and the non-halogen epoxy resin in the cyanate ester resin composition is 100 parts by weight, the usage amount of the corresponding inorganic filler material is preferred to be 10-300 parts by wight, more preferred to be 30-200 parts by weight, and most preferred to be 50-150 parts by weight.

The inorganic filler materials of the present invention can be used together with surface treating agent, or wetting and dispersing agent. The surface treating agent is not particularly restrictive, which is selected from common surface treating agents for treating surface of inorganic substance. The surface treating agent specifically is ethyl silicate compound, organic acid compound, aluminate compound, titanate compound, organic silicon oligomer, macromolecular treating agent, silane-coupling agent, etc. The silane-coupling agent is not particularly restrictive, which is selected from common silane-coupling agents for treating surface of inorganic substance, and specifically can be amino silane coupling agent, epoxy group silane coupling agent, ethenyl silane coupling agent, phenyl silane coupling agent, cation silane coupling agent, sulfydryl silane coupling agent, etc. The wetting and dispersing agent is not particularly restrictive, which is selected from common wetting and dispersing agents for coatings. Various type of surface treating agents, or wetting and dispersing agents in the present invention can be used alone or can be used in appropriate combination as required.

The cyanate ester resin composition of the present invention can also comprise maleimide compound. The maleimide compound is not particularly restrictive, which is a compound that comprises at least one maleimide group in each molecule. The maleimide compound is further preferred to be a compound that comprises at least two maleimide groups in each molecule. The maleimide compound is not particularly restrictive, which specifically is N-phenyl maleimide, N- (2-methylphenyl) maleimide, N- (4-methylphenyl) maleimide, N- (2, 6-dimethylphenyl) maleimide, bis (4-maleimidephenyl) methane, 2,2-bis (4-(4- maleimidephenoxy) -phenyl) propane, bis (3,5-dimethyl-4-maleimidephenyl) methane, bis (3-ethyl-5-methyl-4-maleimidephenyl) methane, bis (3,5-diethyl-4- maleimidephenyl) methane, polyphenylmethylmaleimide, prepolymer of the above mentioned maleimide compounds, or, prepolymer of maleimide compound and amino compound. The maleimide compound is preferred to be bis (4-maleimidephenyl) methane, 2,2-bis (4- (4- maleimidephenoxy) -phenyl) propane, or bis (3-ethyl-5-methyl-4-maleimidephenyl) methane. The maleimide compound can be used alone, or can be used by mixing multiple kinds of maleimide compounds together as required.

The usage amount of the maleimide compound of the present invention is not particularly restrictive, which is preferred to comprise 5-80wt%, and more preferred to comprise 10-70wt% of the total amount of the cyanate ester resin and the maleimide compound in the cyanate ester resin composition.

The cyanate ester resin composition of the present invention can also be used in combination together with other cyanate ester resin except the cyanate ester resin as shown in formula I , so long as the other cyanate ester resin will not impair the intrinsic property of the cyanate ester resin composition. The other cyanate ester resin can be selected from the group consisting of bisphenol A type cyanate ester resin, bisphenol F type cyanate ester resin, bisphenol M type cyanate ester resin, bisphenol S type cyanate ester resin, bisphenol E type cyanate ester resin, bisphenol P type cyanate ester resin, phenol novolac type cyanate ester resin, cresol novolac type cyanate ester resin, naphthol phenol novolac type cyanate ester resin, dicyclopentadiene type cyanate ester resin, tetramethyl bisphenol F type cyanate ester resin, phenolphthalein type cyanate ester resin, naphthol type cyanate ester resin, aralkyl type cyanate ester resin, and prepolymer of the above mentioned cyanate ester resins. The cyanate ester resin can be used alone, or can be used by mixing multiple kinds of cyanate ester resins together as required.

The cyanate ester resin composition of the present invention can also be used in combination together with various high polymers or organic filler materials, so long as they will not impair the intrinsic property of the cyanate ester resin composition. The high polymers or organic filler materials specifically are various liquid crystal polymers, thermosetting resins, thermoplastic resins, and, oligomer and rubber thereof, various flame retardant compounds or agents, etc. They can be used alone, or can be used by mixing multiple kinds of them together as required. Organic silicon powder has good flame retardance, so it is preferred.

The cyanate ester resin composition of the present invention can also be used in combination together with a curing accelerator as required, so as to control the curing reaction rate. The curing accelerator is not particularly restrictive, which can be selected from common curing accelerators for accelerating curing cyanate ester resins, epoxy resins or non-halogen epoxy resins, and specifically is organic salt of metals such as copper, zinc, cobalt, nickel and manganese, imidazole and imidazole derivatives, tertiary amine, etc.

The present invention further provides a prepreg, a laminated material and a metal clad laminated material made from the above mentioned cyanate ester resin composition. The prepreg comprises a substrate material, and the cyanate ester resin composition that adheres to the substrate material after the substrate material is dipped in the cyanate ester resin composition and then is dried. The laminated material comprises at least one prepreg that is laminated and cured to obtain the laminated material. The metal clad laminated material comprises at least one prepreg, and metal foil cladded to one side or two sides of the prepreg, and the prepreg and the metal foil are laminated and cured to obtain the metal clad laminated material.

Wherein, the laminated material and the metal clad laminated material made from the prepreg have good heat resistance and low coefficients of thermal expansion in X, Y directions, and, still have good flame retardance without using halogen-containing compounds or phosphorus-containing compounds as the flame retardant, so they are fit for making a substrate material for high density PCB.

The substrate material of the present invention is not particularly restrictive, which can be selected from known substrate materials for making various PCB materials. The substrate material specifically is inorganic fiber (such as fiberglass of E glass, D glass, M glass, S glass, T glass, NE glass, and quartz), or organic fiber (such as polyimide, polyamide, polyester, liquid crystal polymer). The form of the substrate material generally is woven fabric, nonwoven fabric, roving, short fiber, fiber paper, etc. In the above mentioned substrate materials, the substrate material of the present invention is preferred to be fiberglass cloth.

The prepreg of the present invention is made from the cyanate ester resin composition in combination with the substrate material, and the laminated material of the present invention is obtained by laminating and curing the above mentioned prepreg. The preparation mehtod for the metal clad laminated material of the present invention specifically is: place an above mentioned prepreg, or make two or more pieces of above mentioned prepregs mutually overlapped, then clad metal coil as required to one side or two sides of the prepreg or the prepregs mutually overlapped, and finally laminate and cure them to obtain the metal clad laminated material. The metal foil is not particularly restrictive, which can be selected from metal foils for PCB materials. The laminating condition can choose a general laminating condition used by laminated material for PCB materials, and multi-layer boards.

Aiming at the metal clad laminated material made from the cyanate ester resin composition of the present invention, the coefficients of thermal expansion in X, Y directions (X-CTE/Y-CTE), solder leach resistance and flame retardance will be tested, and the test result will be further detailedly described with the following embodiments.

Synthetic example: synthesis of the phenol phenyl aralkyl type cyanate ester resin

Add 300 g of chloroform and 0.97mol of cyanogen chloride into a three-neck flask, stir fully to make them mix evenly, and stabilize the temperature at - 10 °C. Dissolve 86 g of (hydroxy content is 0.49 mol) phenol phenyl aralkyl type novolac resin (MEH-7800S, softening point: 76 °C, hydroxy equivalent: 175g/eq, provided by MEIWA PLASTIC INDUSTRIES, LTD., the structural formula is as shown in the formula IV) and 0.72 mol of triethylamine in 700 g of chloroform, make them mix evenly, add the solution in drops at -10 °C slowly into the above mentioned solution of cyanogen chloride in chloroform, and make the dropping time longer than 120 min. After finish dropping, continue to react for 3 hours, and then stop the reaction. Use a funnel to filter out the salt produced in the reaction, wash the filtrate obtained with 500 ml of 0.1mol/L hydrochloric acid, and then wash with deionized water for five times until the PH value is neutral. Add sodium sulfate to the extracted chloroform solution, so as to remove the water in the chloroform solution, and then remove the sodium sulfate by filtering. Remove the chloroform solvent by distillation at 70 °C, then obtain solid phenol phenyl aralkyl type cyanate ester resin via reduced pressure distillation at 90 °C, of which the structural formula is as shown in the formula I. The product is analyzed by infrared spectrum, and there is a strong absorption peak at 2265 cm-1, which is the Infrared absorption characteristic peak of cyano group.

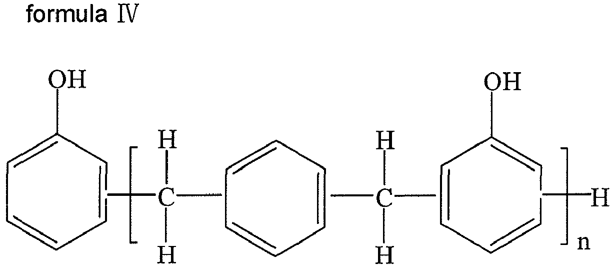

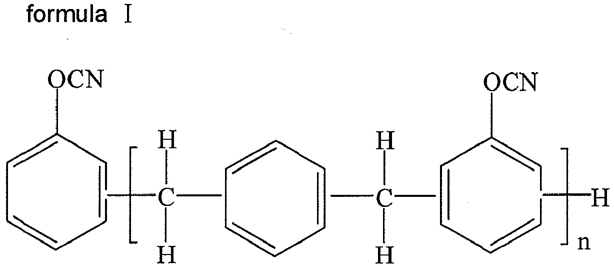

Embodiment 1

Dissolve 70 parts by weight of phenol phenyl aralkyl type cyanate ester resin obtained in the synthetic example, 30 parts by weight of naphthol naphthyl ether type epoxy resin (EXA-7311, provided by DIC Co., Ltd.) and 0.02 parts by weight of zinc caprylate in methyl ethyl ketone, make them mix evenly, then add 100 parts by weight of boehmite (APYRAL AOH 30, provided by Nabaltec), 5 parts by weight of organic silicon powder (KMP-605, provided by Shin-Etsu Chemical Co., Ltd.), 1 parts by weight of epoxy group silane coupling agent (Z-6040, provided by Dow Corning Corporation), 1 parts by weight of dispersing agent (BYK-W903, provided by BYK) and add methyl ethyl ketone to adjust to an appropriate viscosity, and then stir and mix evenly to obtain a glue solution. Impregnate 1078 fiberglass cloth, 2116 fiberglass cloth with the above mentioned glue solution, then dry the fiberglass cloth to remove the solvent, thereby obtaining prepregs. Respectively laminate 2 (pieces)x1078, 4 (pieces)x2116, and 8 (pieces)×2116 of the above mentioned prepregs, respectively clad electrolytic copper foils with the thickness of 18 µm at the two sides of the laminated prepregs, and then cure for 2 hours in a press machine with a curing pressure of 45 Kg/cm2 and a curing temperature of 220 °C, thereby respectively obtaining copper clad laminated materials with the thickness of 0.1, 0.4,and 0.8 mm.

Embodiment 2

Dissolve 35 parts by weight of phenol phenyl aralkyl type cyanate ester resin obtained in the synthetic example, 15 parts by weight of phenol biphenyl aralkyl type epoxy resin (NC-3000-FH, provided by Nippon Kayaku Co.,Ltd.), 50 parts by weight of naphthol naphthyl ether type epoxy resin (EXA-7311, provided by DIC Co., Ltd.) and 0.02 parts by weight of zinc caprylate in methyl ethyl ketone, make them mix evenly, then add 80 parts by weight of boehmite (APYRAL AOH 30, provided by Nabaltec), 1 parts by weight of epoxy group silane coupling agent (Z-6040, provided by Dow Corning Corporation), 1 parts by weight of dispersing agent (BYK-W903, provided by BYK) and add methyl ethyl ketone to adjust to an appropriate viscosity, and then stir and mix evenly to obtain a glue solution. According to the same process as in the embodiment 1, copper clad laminated materials with the thickness of 0.1, 0.4, and 0.8 mm are respectively obtained.

Embodiment 3

Dissolve 40 parts by weight of phenol phenyl aralkyl type cyanate ester resin obtained in the synthetic example, 15 parts by weight of bis (3-ethyl-5-methyl-4-maleimidephenyl) methane (BMI-70, provided by KI Chemical Industry Co., Ltd.), 40 parts by weight of phenol biphenyl aralkyl type epoxy resin (NC-3000-FH, provided by Nippon Kayaku Co.,Ltd.), 5 parts by weight of naphthol phenolic epoxy resin (HP-4770, provided by DIC Co., Ltd.) and 0.02 parts by weight of zinc caprylate in DMF and methyl ethyl ketone, make them mix evenly, then add 50 parts by weight of boehmite (APYRAL AOH 30, provided by Nabaltec), 75 parts by weight of spherical fused silica (SC2050, provided by Admatechs), 1 parts by weight of epoxy group silane coupling agent (Z-6040, provided by Dow Corning Corporation), 1 parts by weight of dispersing agent (BYK-W903, provided by BYK) and add methyl ethyl ketone to adjust to an appropriate viscosity, and then stir and mix evenly to obtain a glue solution. According to the same process as in the embodiment 1, copper clad laminated materials with the thickness of 0.1, 0.4, and 0.8 mm are respectively obtained.

Embodiment 4

Dissolve 38 parts by weight of phenol phenyl aralkyl type cyanate ester resin obtained in the synthetic example, 25 parts by weight of bis (3-ethyl-5-methyl-4-maleimidephenyl) methane (BMI-70, provided by KI Chemical Industry Co., Ltd.), 32 parts by weight of phenol biphenyl aralkyl type epoxy resin (NC-3000-FH, provided by Nippon Kayaku Co.,Ltd.), 5 parts by weight of naphthol phenyl aralkyl type epoxy resin (ESN-175, provided by TOHTO KASEI CO., INC.) and 0.02 parts by weight of zinc caprylate in DMF and methyl ethyl ketone, make them mix evenly, then add 150 parts by weight of spherical fused silica (SC2050, provided by Admatechs), 10 parts by weight of organic silicon powder (KMP-605, provided by Shin-Etsu Chemical Co., Ltd.), 5 parts by weight of organic silicon powder (KMP-597, provided by Shin-Etsu Chemical Co., Ltd.), 1.5 parts by weight of dispersing agent (BYK-W9010, provided by BYK) and add methyl ethyl ketone to adjust to an appropriate viscosity, and then stir and mix evenly to obtain a glue solution. According to the same process as in the embodiment 1, copper clad laminated materials with the thickness of 0.1, 0.4, and 0.8 mm are respectively obtained.

Comparison example 1

Except for 35 parts by weight of phenol phenyl aralkyl type cyanate ester resin used in the embodiment 2 being replaced with 35 parts by weight of bisphenol A type cyanate ester resin prepolymer (BA-3000, provided by LONZA), copper clad laminated materials with the thickness of 0.1, 0.4, and 0.8 mm are respectively obtained according to the same process as in the embodiment 1.

Comparison example 2

Except for 40 parts by weight of phenol phenyl aralkyl type cyanate ester resin used in the embodiment 3 being replaced with 40 parts by weight of dicyclopentadiene type cyanate ester resin (DT-4000, provided by LONZA), copper clad laminated materials with the thickness of 0.1, 0.4, and 0.8 mm are respectively obtained according to the same process as in the embodiment 3.

The physical property test data about the coefficients of thermal expansion in X, Y directions (X-CTE/Y-CTE), solder leach resistance and flame retardance of the metal clad laminated materials produced in the above mentioned embodiments and comparison examples are as shown in Table 1.

Table 1 physical property test data of the metal clad laminated materials produced in the embodiments and comparison examples.

| | Embodiment 1 | Embodiment 2 | Embodiment 3 | Embodiment 4 | Comparison example 1 | Comparison example 2 |
|---|---|---|---|---|---|---|
| X-CTE | 9.5 | 9.7 | 9.2 | 8.3 | 10.1 | 9.4 |
| Y-CTE | 9.1 | 9.2 | 8.8 | 7.9 | 9.5 | 9.0 |
| Solder dip @288°C, S | >120 | >120 | >120 | >120 | >120 | >120 |
| flame retardance | V-0 | V-0 | V-0 | V-0 | burning | burning |

Test method for the physical property test data in Table 1 is as the following:

Solder leach resistance: dip a sample of 50X50 mm² into a tin stove at 288 °C, then observe the situation of delaminating and bubbling, and record the corresponding time. Thickness of the test sample: 0.4 mm.

Flame retardance: judge according to UL94 vertical combustion test standard. Thickness of the test sample: 0.4 mm.

X-CTE/Y-CTE: Y direction is along warp direction of fiberglass cloth, and X direction is along woof direciton of fiberglass cloth; test instrument and condition: TMA, from room temperature 25 °C to 300 °C at a heating rate of 10 °C/min, from 50 °C to 150 °C measuring coefficients of thermal expansion (CTE) in plane direction. Thickness of the test sample: 0.1 mm.

Physical property analysis:

Comparing the embodiments with the comparison examples, the flame retardance of the embodiments has reached level V-0, and the embodiments have lower coefficients of thermal expansion in X, Y directions.

In summary, the cyanate ester resin composition of the present invention has good heat resistance and flame retardance; the laminated material and the metal clad laminated material made from the prepreg that is made from the cyanate ester resin composition, still have good flame retardance and low coefficients of thermal expansion in X, Y directions, without using halogen-containing compounds or phosphorus-containing compounds as the flame retardant, which are fit for making a substrate material for high density PCB.

Although the present invention has been described in detail with above said preferred embodiments, but it is not to limit the scope of the invention. So, all the modifications and changes according to the characteristic and spirit of the present invention, are involved in the protected scope of the invention.

## Claims

1. A cyanate ester resin composition comprising cyanate ester resin, non-halogen epoxy resin and inorganic filler material, wherein the structural formula of the cyanate ester resin is: 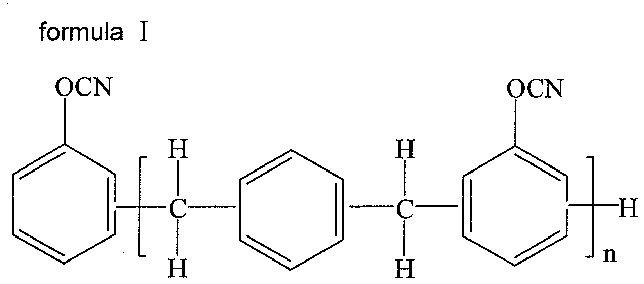 wherein n represents an integer between 1 and 50.

2. A cyanate ester resin composition as claimed in claim 1, wherein the structural formula of the non-halogen epoxy resin is: 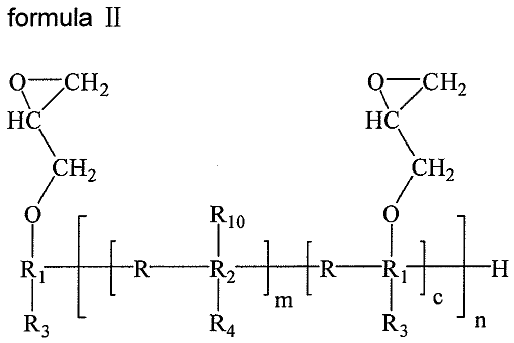 wherein R represents -O- or 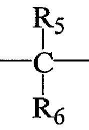 group, R₁₀ represents hydrogen or 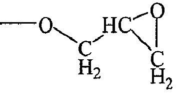 group, R₁ and R₂ represent aryl, R₃ and R₄ represent hydrogen, alkyl, aryl, aralkyl or a group as shown in formula III, R₅ and R₆ represent hydrogen, alkyl, aryl or aralkyl, m represents an integer between 0 and 5, c represents an integer between 1 and 5 and n represents an integer between 1 and 50, wherein formula III is 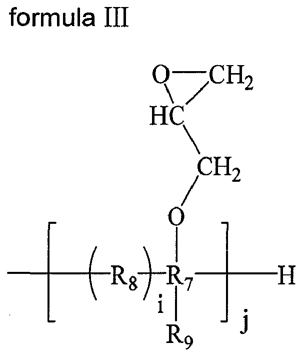 wherein R₇ represents aryl, R₈ represents -O- or 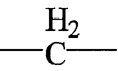 group, R₉ represents hydrogen, alkyl, aryl or aralkyl, i represents 0 or 1 and j represents 1 or 2.

3. A cyanate ester resin composition as claimed in claim 1 or 2, wherein the inorganic filler material is silica, boehmite or a mixture of silica and boehmite.

4. A cyanate ester resin composition as claimed in any preceding claim, wherein the usage amount of the cyanate ester resin is 10-90wt% of the total amount of the cyanate ester resin and the non-halogen epoxy resin and the usage amount of the non-halogen epoxy resin is 90-10wt% of the total amount of the cyanate ester resin and the non-halogen epoxy resin.

5. A cyanate ester resin composition as claimed in any preceding claim, wherein the usage amount of the corresponding inorganic filler material is 10-300 parts by weight, when the total amount of the cyanate ester resin and the non-halogen epoxy resin in the cyanate ester resin composition is 100 parts by weight.

6. A cyanate ester resin composition as claimed in any preceding claim further comprising a maleimide compound.

7. A cyanate ester resin composition as claimed in claim 6, wherein the usage amount of the maleimide compound is 5-80wt% of the total amount of the cyanate ester resin and the maleimide compound.

8. A prepreg obtained or obtainable from a cyanate ester resin composition of any preceding claim, wherein the prepreg comprises a substrate material, and the cyanate ester resin composition adhering to the substrate material after the substrate material being dipped in the cyanate ester resin composition and then being dried.

9. A laminated material obtained or obtainable from the prepreg of claim 8, wherein the laminated material comprises at least one prepreg that is laminated and cured to obtain the laminated material.

10. A metal clad laminated material obtained or obtainable from the prepreg of claim 8, wherein the metal clad laminated material comprises at least one prepreg, and metal foil cladded to one side or two sides of the prepreg, and the prepreg and the metal foil are laminated and cured to obtain the metal clad laminated material.
